Europäisches Patentamt

European Patent Office

Office européen des brevets

(11) Veröffentlichungsnummer: **0 325 196**
**A1**

## (12) EUROPÄISCHE PATENTANMELDUNG

(21) Anmeldenummer: 89100698.3

(22) Anmeldetag: 17.01.89

(51) Int. Cl.⁴: **G01C 5/00 , G01C 9/06 ,
G01C 22/02**

(30) Priorität: 21.01.88 DE 8800664 U

(43) Veröffentlichungstag der Anmeldung:
26.07.89 Patentblatt 89/30

(84) Benannte Vertragsstaaten:
AT BE CH DE FR GB IT LI LU NL

(71) Anmelder: **Hechinger, Helmut
Junkersstrasse 4
D-7730 VS-Schwenningen(DE)**

(72) Erfinder: **Kopp, Bernhard
Bert-Brecht-Strasse 49
D-7730 VS-Schwenningen(DE)**

(74) Vertreter: **Patentanwälte Dipl.-Ing. Klaus
Westphal Dr. rer. nat. Bernd Mussgnug Dr.
rer.nat. Otto Buchner
Waldstrasse 33
D-7730 VS-Villingen(DE)**

(54) Vorrichtung zur Messung der von einem Strassenfahrzeug, insbesondere Fahrrad, zurückgelegten Höhenmeter.

(57) Vorrichtung zur Messung der mit einem Straßenfahrzeug zurückgelegten Höhenmeter, welche einen elektrischen Wegstreckenmesser und einen mit Pendel arbeitenden Neigungsmesser aufweist. Der Drehwinkel des Pendels wird in ein elektrisches Signal umgewandelt, welches zusammen mit dem Signal des Wegstreckenmessers ein Anzeigegerät für die zurückgelegten Höhenmeter steuert. Das Pendel ist an der Achse eines elektromechanischen Drehwinkelgebers aufgehängt und ein Mikroprozessor führt die mathematische Verknüpfung der Signale des Wegstreckenmessers und des Drehwinkelgebers durch und speichert die errechneten Werte. Erforderlichenfalls werden die Signale vor Einspeisung in den Mikroprozessor in einem Analog-Digital-Wandler umgesetzt.

FIG. 2

```
 ┌──────────┐   ┌──────────┐   ┌──────────┐   ┌──────────┐
 │Drehwinkel│   │  AD -    │   │  Mikro-  │   │          │
 │  geber   │───│ Wandler  │───│prozessor │───│ Anzeige  │
 └──────────┘   └──────────┘   └──────────┘   └──────────┘
   10             24             26             28

 ┌──────────┐                   ┌──────────┐
 │ elektron.│  25               │          │  30
 │Wegstrecken│──                │ Tastatur │
 │  messer  │                   └──────────┘
 └──────────┘
```

## Vorrichtung zur Messung der von einem Straßenfahrzeug, insbesondere Fahrrad, zurückgelegten Höhenmeter

Die Erfindung betrifft eine Vorrichtung nach dem Oberbegriff des Anspruchs 1.

Aus der US-PS 2 362 616 ist bereits eine Vorrichtung dieser Art bekannt, die verhältnismäßig kompliziert ausgebildet und daher in der Herstellung kostspielig ist.

Durch die Erfindung soll für einfache Straßenfahrzeuge, insbesondere Fahrräder, leichte Motorräder, oder mit Sonnenkollektoren oder anderen verhältnismäßig schwachen Energiequellen angetriebene Fahrzeuge, eine billige, robuste Vorrichtung zur Messung der zurückgelegten Höhenmeter geschaffen werden, die aus einfachen Bauteilen zusammengesetzt ist und die schnell und einfach an einem derartigen Fahrzeug montiert werden kann.

Diese Aufgabe wird bei einer Vorrichtung der eingangs genannten Art erfindungsgemäß durch die kennzeichnenden Merkmale des Anspruchs 1 gelöst.

Als Wegstreckenmesser kann grundsätzlich das meist ohnehin vorhandene übliche Tachometer verwendet werden. Der die Digitalsignale des Wandlers verarbeitende Mikroprozessor führt in einer dem Fachmann geläufigen Art die erforderlichen mathematischen Verknüpfungen der Signale des Wegstreckenmessers und des Drehwinkelgebers durch und speichert die errechneten Werte. Entweder unmittelbar oder durch Tastendruck können die gespeicherten Höhenmeter abgerufen und auf einem Anzeigegerät angezeigt werden. Erforderlichenfalls werden die Signale vor Einspeisung in den Microprozessor in einem Analog-Digital-Wandler umgesetzt.

Positive Winkelabweichungen des Drehwinkelgebers werden als Steigung und negative Winkelabweichungen als Gefälle definiert. Gemäß Anspruch 3 ist vorzugsweise eine Einrichtung vorgesehen, welche dafür sorgt, daß Gefällstrecken bei der Berechnung der gefahrenen Höhenmeter nicht berücksichtigt bzw. unterdrückt werden.

Durch eine mit dem Mikroprozessor verbundene Tastatur gemäß Anspruch 4 können wahlweise eine Nullstellung oder verschiedene Anzeigen am Anzeigegerät bewirkt werden. Die gefahrenen Höhenmeter können außer in dem streckenbezogenen Speicher zusätzlich in einem durch Tastenbedienung nicht löschbaren Speicher abgelegt werden, der nur durch einen sog. "Hardwarereset" oder dgl. gelöscht werden kann. Auch dieser Wert kann durch Tastenbedienung an der Tastatur der Anzeige gebracht werden.

Das Pendel ist mit einem verhältnismäßig großen Pendelgewicht und einer verhältnismäßig kurzen Pendelstange ausgestattet, was im Hinblick auf die verhältnismäßig kleinen Beschleunigungen der für die erfindungsgemäße Vorrichtung geeigneten Fahrzeuge für eine einigermaßen stabile Anzeige der Fahrzeugneigung ohne weitere Dämpfungseinrichtungen ausreicht.

Bei einer zweckmäßigen Ausgestaltung der Erfindung nach Anspruch 5 kann die Vorrichtung in einen elektronischen Tachometer des Fahrzeugs eingebaut sein, so daß einige Bestandteile des Tachometers auch für die erfindungsgemäße Vorrichtung Verwendung finden können und somit eine sehr einfache, billige und wenig platzraubende Ausführungsform erzielt wird.

Die Justage der Nullage des Neigungsmessers kann entweder auf mechanische Weise, beispielsweise durch Einstellen eines Festanschlages für den mechanisch beweglichen Teil des Neigungsmessers, etwa das Pendel, oder auf elektronischem Wege erfolgen.

Bei der Anzeige der momentanen Steigung der Fahrbahn aufgrund der Messung des Neigungswinkels entspricht üblicherweise ein Winkel von 45° einer Steigung von 100 %.

Bei besonders einfachen Ausführungsformen gemäß den Ansprüchen 6 und 7 sind Drehwinkelgeber und Pendel von einem gemeinsamen Gehäuse umgeben und die jeweiligen Drehwinkel werden durch einen auf einem Schleifwiderstand gleitenden Schleifkontakt abgetastet, wobei der Schleifwiderstand mit der Innenseite des Gehäuses und der Schleifkontakt mit dem Pendel fest verbunden ist oder umgekehrt. Diese Anordnung ist außerordentlich robust und einfach herzustellen und liefert verhältnismäßig zuverlässige Werte für den Niegungswinkel.

Anhand der Figuren werden Ausführungsbeispiele der Erfindung näher erläutert. Es zeigt

Fig. 1 eine Ansicht des einen Drehwinkelgeber aufweisenden Neigungsmessers,

Fig. 2 eine Blockschaltbild der erfindungsgemäßen Vorrichtung und

Fig. 3 und 4 Teildarstellungen von weiteren Ausführungsformen des erfindungsgemäßen Drehwinkelgebers.

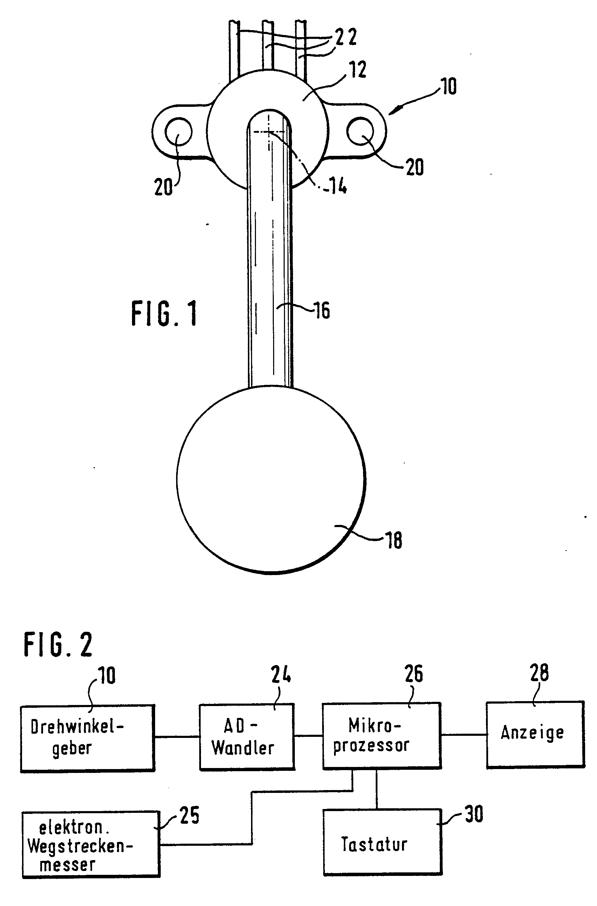

Gemäß Fig. 1 weist der Neigungsmesser einen Drehwinkel geber 10 auf, der mit einem Drehpotentiometer 12 versehen ist, an dessen Achse 14 die ein Pendelgewicht 18 tragende Pendelstange 16 eines mechanischem Pendels parallel zur Zeichenebene schwenkbar aufgehängt ist. Durch in Befestigungsbohrungen 20 einzuschraubende, nicht dargestellte Schrauben, kann der Neigungsmesser 10 vorzugsweise am Rahmen, gewünschtenfalls jedoch auch an der Gabel oder am Lenker bzw. Lenkervorbau eines Fahrrads oder einem entsprechenden Teil eines anderen Straßenfahrzeugs geeignet befestigt werden. Aus dem Drehpotentiometer 12 herausführende elektrische Anschlußkabel 22 können in geeigneter Weise an die anderen elektrischen Teile der Vorrichtung angeschlossen werden.

Gemäß Fig. 2 ist der Drehwinkelgeber 10 an einen Analog-Digital-Wandler 24 angeschlossen, der den vom Drehwinkelgeber festgestellten analogen Meßwert, z.B. einen elektrischen Widerstand, auf den sich der Drehwinkelgeber durch die durch Schwerkraft erzwungene Vertikalstellung des Pendels 16, 18 einstellt, in ein digitales Signal umwandelt. Dieses Signal wird auf den anschließenden Mikroprozessor 26 gegeben, der das Signal in eine Winkelabweichung des Fahrzeugs von der Horizontalen umrechnet. Auf den Mikroprozessor werden ferner die Signale des elektronischen Wegstreckenmessers 25 gegeben. Die vom Mikroprozessor errechnete Winkelabweichung sowie die errechnete Wegstrecke aufgrund der Signale des Wegstreckenmessers 25 dienen als Basis für die Berechnung von gefahrenen Höhenmetern bzw. der momentanen Steigung der Fahrbahn. Diese Werte werden entweder laufend auf ein Anzeigegerät 28 gegeben, oder sie können durch Druck auf eine entsprechende Taste der an den Mikroprozessor 26 angeschlossenen Tastatur 30 abgerufen und daraufhin am Anzeigegerät 28 dargestellt werden. Durch die Tastatur können auch die oben geschilderten weiteren Rückstellungen, Löschungen, Anzeigen und dgl. am Mikroprozessor26 bzw. Anzeigerät 28 hervorgerufen werden.

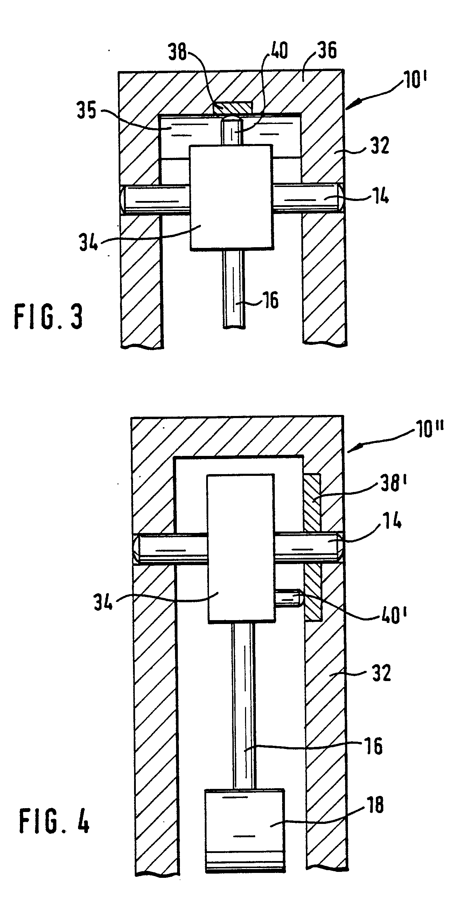

Eine weitere Ausführungsform des Neigungsmessers mit einem elektromechanischen Drehwinkelgeber 10′ ist in Fig. 3 dargestellt. Bei dieser Ausführungsform sind der Drehwinkelgeber 10′ und das Pendel, von dem in Fig. 3 nur ein Teil der Pendelstange 16 dargestellt ist, in einem gemeinsamen Gehäuse 32 angeordnet, wobei die Achse 14 des Drehwinkelgebers in entsprechenden Bohrungen des Gehäuses 32 gelagert ist. An der Achse 14 ist mittels eines die Achse umfassenden Blockes 34 die Pendelstange 16 fest aufgehängt. In die zylindrisch ausgebildete Innenseite 35 des Gehäusedachs 36 ist ein in nicht dargestellter geeigneter Weise an die übrigen elektrischen Teile der Vorrichtung angeschlossener Schleifwiderstand 38 eingelassen, der die Form eines Abschnitts eines dünnen Zylinderrings besitzt. Auf diesem Zylinderring schleift ein mit dem Block 34 fest verbundener Schleifkontakt 40, der ebenfalls in nicht gezeigter Weise elektrisch angeschlossen ist.

In Fig. 5 ist eine weitere Ausführungsform des Neigungsmessers mit einem Drehwinkelgeber 10″

und einem Pendel 16, 18 dargestellt. Gehäuse 32, Block 34 und Achse 14 sind in ähnlicher Weise ausgebildet und gelagert wie bei der Ausführungsform gemäß Fig. 3. Der Schleifwiderstand 38′ ist jedoch bei dieser Ausführungsform in eine Seitenwand des Gehäuses 32 an deren Innenseite eingelassen und besitzt die Form einer die Achse 14 umgebenden Kreisringscheibe. Der Schleifwiderstand 38′ wird von einem aus dem Block 34 seitlich abstehenden Schleifkontakt 40′ abgetastet. Im übrigen ist die elektrische Schaltung bei diesem Ausführungsbeispiel wie beim Beispiel gemäß Fig. 3.

## Ansprüche

1. Vorrichtung zur Messung der mit einem Straßenfahrzeug, insbesondere Fahrrad, zurückgelegten Höhenmeter, mit einem elektrischen Wegstreckenmesser, einem Neigungsmesser, der ein Pendel, dessen Pendelachse quer zur Fortbewegungsrichtung des Straßenfahrzeugs verläuft, und eine Einrichtung zur Erzeugung eines dem Drehwinkel des Pendels entsprechenden elektrischen Signals aufweist, und mit einem durch den Wegstreckenmesser und den Neigungsmesser gesteuerten Anzeigegerät für die zurückgelegten Höhenmeter, dadurch gekennzeichnet, daß das Pendel (16, 18) an der Achse (14) eines elektromechanischen Drehwinkelgebers (12) aufgehängt ist, und daß der Wegstreckenmesser (25) und der Drehwinkelgeber (12) an einen Mikroprozessor (26) angeschlossen sind, der seinerseits das Anzeigegerät (28) speist.

2. Vorrichtung nach Anspruch 1, dadurch gekennzeichnet, daß zwischen den Wegstreckenmesser (25) und/oder den Drehwinkelgeber (12) einerseits und den Mikroprozessor (26) andererseits eine Analog-Digital-Wandler (24) eingeschaltet ist.

3. Vorrichtung nach Anspruch 1 oder 2, dadurch gekennzeichnet, daß eine Einrichtung zum Sperren der Übertragung von negativen, einem Gefälle entsprechenden Werten des Drehwinkelgebers (10) vorgesehen ist.

4. Vorrichtung nach einem der vorangehenden Ansprüche, dadurch gekennzeichnet, daß mit dem Mikroprozessor (26) eine Tastatur (30) verbunden ist.

5. Vorrichtung nach einem der vorangehenden Ansprüche, dadurch gekennzeichnet, daß sie mit einem elektronischen Tachometer derart zusammengefaßt ist, daß Tachometer und Vorrichtung zur Höhenmetermessung einen gemeinsamen Wegstreckenmesser, einen gemeinsamen Mikroprozessor (26), ein gemeinsames Anzeigegerät (28) und ggf. eine gemeinsame Tastatur (30) aufweisen.

6. Vorrichtung nach einem der vorangehenden Ansprüche, dadurch gekennzeichnet, daß Drehwinkelgeber (12) und Pendel (16, 18) in einem gemeinsamen Gehäuse (32) angeordnet sind, in welchem die Achse (14) des Drehwinkelgebers (12) gelagert ist, und daß der Drehwinkelgeber (12) einen mit dem Pendel (16, 18) bzw. der Innenseite des Gehäuses (32) fest verbundenen Schleifkontakt (40 40') und einen mit der innenseite des Gehäuses (32) bzw. dem Pendel (16, 18) fest verbundenen, bom Schleifkontakt (40 40') abgetasteten Schleifwiderstand (38, 38') aufweist.

7. Vorrichtung nach Anspruch 6, dadurch gekennzeichnet, daß der Schleifwiderstand auf der mit dem Pendel (16, 18) fest verbundenen Achse (14) des Drehwinkelgebers (12) in hohlzylindrischer Form angebracht ist.

FIG. 1

FIG. 2

| Drehwinkel-geber | AD-Wandler | Mikro-prozessor | Anzeige |

| elektron. Wegstrecken-messer | | | Tastatur |

FIG. 3

FIG. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | PATENT ABSTRACTS OF JAPAN, Band 5, Nr. 202 (P-95)[874], 22. Dezember 1981; & JP-A-56 124 010 (MITSUBISHI JIDOSHA KOGYO K.K.) 29-09-1981 * Insgesamt * --- | 1,2,4 | G 01 C 5/00<br>G 01 C 9/06<br>G 01 C 22/02 |
| Y | Idem --- | 5,6 | |
| Y | DE-A-3 446 689 (HELEC HUNTE) * Zusammenfassung; Ansprüche 1-5 * --- | 5 | |
| Y | DE-A-3 208 811 (MÖBUS) * Figur 6; Seite 4, Zeilen 6-22 * --- | 6 | |
| A | US-A-2 659 985 (CLOUD) * Anspruch 2 * --- | 1 | |
| A | PATENT ABSTRACTS OF JAPAN, Band 9, Nr. 144 (P-365)[1867], 19. Juni 1985; & JP-A-60 22 618 (SUZUKI JIDOSHA KOGYO K.K.) 05-02-1985 * Insgesamt * ----- | 1,2 | RECHERCHIERTE SACHGEBIETE (Int. Cl.4)<br><br>G 01 C<br>B 62 J |

Der vorliegende Recherchenbericht wurde für alle Patentansprüche erstellt

| Recherchenort | Abschlußdatum der Recherche | Prüfer |
|---|---|---|
| DEN HAAG | 20-04-1989 | KOLBE W.H. |